(19) Europäisches Patentamt
European Patent Office
Office européen des brevets

(11) **EP 1 007 747 B1**

(12) **FASCICULE DE BREVET EUROPEEN**

(45) Date de publication et mention de la délivrance du brevet:
**20.03.2002 Bulletin 2002/12**

(21) Numéro de dépôt: **98942772.9**

(22) Date de dépôt: **24.08.1998**

(51) Int Cl.$^7$: **C22B 3/26**, C22B 3/38, C22B 59/00, C22B 60/02, C07F 9/53, G21F 9/12, G21F 9/04

(86) Numéro de dépôt international:
**PCT/FR98/01839**

(87) Numéro de publication internationale:
**WO 99/10545 (04.03.1999 Gazette 1999/09)**

(54) **PROCEDE DE SEPARATION DES ACTINIDES ET DES LANTHANIDES PAR EXTRACTION LIQUIDE-LIQUIDE AU MOYEN DE CALIXARENES**

ABTRENNUNG VON AKTINOIDEN UND LANTHANOIDEN DURCH FLÜSSIG-FLÜSSIG EXTRAKTION MITTELS CALIXARENE-VERBINDUNGEN

METHOD FOR SEPARATING ACTINIDES AND LANTHANIDES BY LIQUID-LIQUID EXTRACTION USING CALIXARENES

(84) Etats contractants désignés:
**BE CH DE ES GB IT LI**

(30) Priorité: **25.08.1997 FR 9710614**

(43) Date de publication de la demande:
**14.06.2000 Bulletin 2000/24**

(73) Titulaire: **COMMISSARIAT A L'ENERGIE ATOMIQUE**
**75015 Paris (FR)**

(72) Inventeurs:
- **DELMAU, Laetitia**
**F-13014 Marseille (FR)**
- **SIMON, Nicole**
**F-04860 Pierrevert (FR)**
- **DOZOL, Jean-François**
**F-04660 Pierrevert (FR)**
- **TOURNOIS, Bernard**
**F-83560 Vinon sur Verdon (FR)**
- **ROUSSIN-BOUCHARD, Christine**
**F-04200 Sisteron (FR)**
- **EYMARD, Serge**
**F-04310 Peyruis (FR)**
- **BÖHMER, Volker**
**D-55126 Mainz (DE)**
- **GRÜTTNER, Cordula**
**D-18273 Gustrow (DE)**
- **SHIVANYUK, Alexander**
**D-55126 Mainz (DE)**
- **MUSIGMANN, Christian**
**D-55122 Mainz (DE)**

(74) Mandataire: **Des Termes, Monique et al**
**Société Brevatome**
**3, rue du Docteur Lancereaux**
**75008 Paris (FR)**

(56) Documents cités:
**EP-A- 0 432 989**
**WO-A-94/24138**
**WO-A-97/17322**
**FR-A- 2 729 958**
**US-A- 5 607 591**

- **PATENT ABSTRACTS OF JAPAN vol. 18, no. 601 (C-1274), 16 novembre 1994 & JP 06 228032 A (NEC CORPORATION), 16 août 1994**
- **PATENT ABSTRACTS OF JAPAN vol. 16, no. 320 (C-0962), 14 juillet 1992 & JP 04 091070 A (KANEBO LTD), 24 mars 1992**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 007 747 B1

## Description

### Domaine technique

La présente invention a pour objet un procédé de séparation des actinides et des lanthanides entre eux à partir d'une solution aqueuse les contenant.

De telles solutions peuvent être en particulier des solutions aqueuses provenant d'installations de retraitement de combustibles nucléaires usés, telles que des solutions de dissolution du combustible ou des effluents aqueux.

Elles peuvent être aussi constituées par des solutions aqueuses provenant du traitement des minerais de terres rares, de thorium et/ou d'uranium.

De façon, plus précise, elle concerne la séparation de tels métaux par extraction liquide-liquide au moyen de calixarènes.

### Etat de la technique antérieur

Séparation au sein des lanthanides et des actinides

Dans la technique antérieure, on a utilisé des procédés d'extraction liquide-liquide pour séparer les lanthanides entre eux au moyen d'extractants organiques tels que l'acide di(2-éthylhexyl)phosphorique, les amines, les sels d'ammonium quaternaire et le tributyl phosphate, comme il est décrit dans les Techniques de l'Ingénieur J 6630-1 à J6630-8. L'extractant le plus sélectif est l'acide di(2-éthylhexyl)phosphorique qui privilégie l'extraction des lanthanides lourds de rayon ionique plus faible.

Calixarènes substitués par des groupements d'oxyde d'acétamidophosphine

On a aussi envisagé d'utiliser des ligands macrocycliques tels que les calixarènes pour extraire des actinides et des lanthanides présents dans des solutions aqueuses, comme il est décrit dans le document FR-A-2 729 958.

Les calixarènes utilisés dans ce document répondent à la formule :

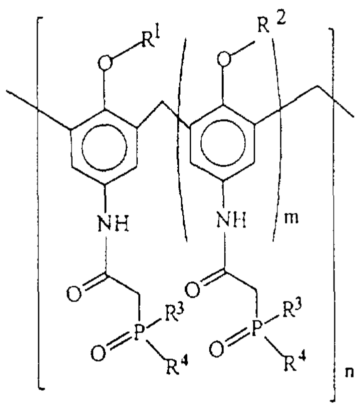

(I)

dans laquelle m est égal à 0 ou 1,

- n est un nombre entier allant de 2 à 8, avec $4 \leq (m + 1) \times n \leq 8$
- $R^1$ et $R^2$ qui peuvent être identiques ou différents, sont des groupes alkyle ou o-nitrophénoxyalkyle, et
- $R^3$ et $R^4$ qui peuvent être identiques ou différents, sont des groupes alkyle ou aryle.

Ces calixarènes peuvent être utilisés pour extraire les actinides et lanthanides à partir de solutions aqueuses provenant du retraitement de combustibles nucléaires usés.

Ils sont fond ionnalisés sur leur bord supérieur par des substituants oxyde d'acétamido phosphine qui présentent une bonne affinité pour les actinides et les lanthanides, et ils sont substitués sur leur bord inférieur par des groupements alkyle ou orthonitrophénoxyalkyle.

Pour l'extraction liquide-liquide des actinides et des lanthanides, ces calixarènes sont dissous dans un diluant organique approprié tel que les nitrophényl alkyl éthers comme l'orthonitrophény hexyl éther.

Avec un tel diluant organique, on obtient de bons taux d'extraction, mais il est impossible de séparer les actinides et les lanthanides entre eux.

Le document JP-A-06/228032 décrit l'utilisation d'un mélange de chloroforme et d'un autre solvant organique tel que le chlorobenzène ou le toluène, pour dissoudre un calixarène en vue de préparer des films du calixarène à partir de la solution obtenue.

**Exposé de l'invention**

L'invention a précisément pour objet un procédé de séparation des actinides et des lanthanides au moyen de tels calixarènes, selon lequel on choisit le diluant et la concentration en calixarène, pour obtenir une séparation des actinides et des lanthanides entre eux.

Selon l'invention telle que définie dans la revendication principale, le procédé de séparation d'au moins un métal M1 choisi dans le groupe des actinides et des lanthanides d'au moins un métal M2 choisi dans ce même groupe à partir d'une solution aqueuse contenant M1 et M2, comprend les étapes suivantes :

- a) mettre en contact la solution aqueuse desdits métaux M1 et M2 avec une phase liquide organique comprenant

  - au moins un calixarène de formule :

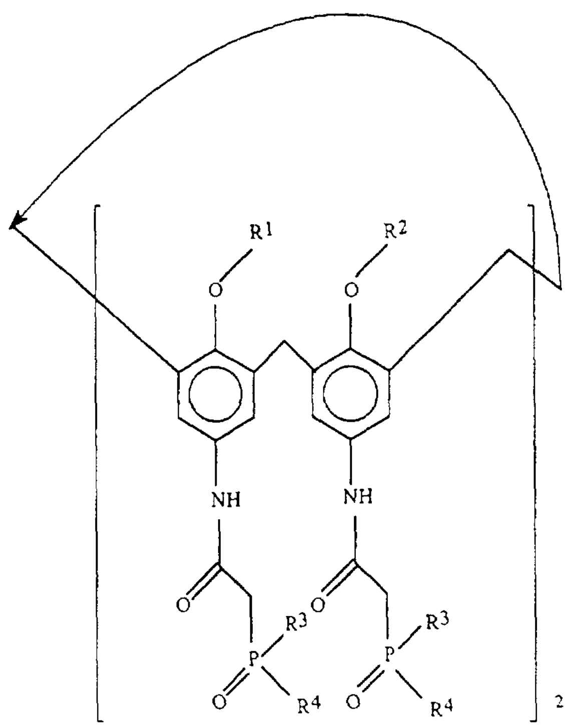

(II)

dans laquelle :

  - $R^1$ et $R^2$ qui peuvent être identiques ou différents, sont des groupes alkyle ou o-nitrophénoxyalkyle, et
  - $R^3$ et $R^4$ qui peuvent être identiques ou différents, sont des groupes aryle ; et

  - un diluant organique,
  ledit diluant et la concentration en calixarène de la phase organique étant choisis de façon telle que le coefficient de distribution du ou des métaux M1 entre cette phase organique et ladite solution aqueuse soit supérieur à 1 et que le coefficient de distribution du ou des métaux M2 entre cette phase organique et ladite solution aqueuse soit inférieur à 1 ; et

- b) séparer ladite solution aqueuse de ladite phase organique.

On rappelle que le coefficient de distribution d'un métal M tel que M1 ou M2 est défini par la formule suivante :

$$D_M = \frac{[M]org, é q}{[M]aq, é q}$$

dans laquelle $[M]_{org,éq}$ correspond à la concentration du métal dans la phase organique à l'équilibre, et $[M]_{aq,éq}$ correspond à la concentration de ce même métal dans la solution aqueuse à l'équilibre. Par exemple, l'extraction peut être suivie par radiotraceur. On détermine ce coefficient de distribution D par le rapport de l'activité du métal dans la phase organique sur l'activité du métal dans la solution aqueuse à l'équilibre.

Lorsque D est supérieur à 1, le métal passe majoritairement en phase organique ; en revanche lorsque D est inférieur à 1, le métal reste majoritairement en phase aqueuse.

Pour obtenir une séparation des différents lanthanides et des actinides par extraction liquide-liquide, il faut donc que les coefficients de distribution des métaux M1 à extraire dans la phase organique soient élevés par rapport à ceux des métaux M2 qui doivent rester dans la phase aqueuse.

Selon l'invention, on a trouvé qu'en choisissant un diluant organique approprié et en réglant la concentration en calixarène de la phase organique, on pouvait obtenir un coefficient D supérieur à 1 pour certains éléments et un coefficient D inférieur à 1 pour d'autres éléments, alors que ceci était pratiquement impossible à obtenir avec le diluant employé jusqu'à présent, l'orthonitrophény alkyl éther.

Le choix du diluant et de la concentration en calixarène dépend non seulement des métaux à séparer mais également de la nature de la solution aqueuse de départ, comme on le verra plus loin.

Selon l'invention, le choix du diluant organique peut en particulier être effectué en déterminant le coefficient de distribution $D_{Gd}$ du gadolinium entre une phase organique constituée du calixarène en solution dans le diluant et une solution aqueuse de gadolinium. Dans ce cas, les diluants susceptibles de convenir sont ceux pour lesquels le coefficient de distribution du gadolinium $D_{Gd}$ entre la phase organique et la solution aqueuse de gadolinium est de 0,5 à 5 lorsque la concentration en calixarène de la phase organique est de $10^{-4}$ à $10^{-3}$ mol/L.

Les diluants susceptibles de convenir peuvent en particulier appartenir au groupe des alcools lourds, par exemple de formule $C_nH_{2n}O$ avec $n \geq 7$, en particulier avec n allant de 7 à 13. A titre d'exemple de tels alcools, on peut citer l'octanol et l'isotridécanol. On peut aussi utiliser comme diluant des solvants chlorés comme le chloroforme, le dichlorométhane et le 1,2-dichloroéthane. On peut encore utiliser des mélanges de diluants.

Les calixarènes utilisables dans le procédé de l'invention sont à sélectionner parmi ceux décrits dans FR-A-2 729 958. Il est nécessaire d'utiliser des calixarènes répondant à la formule (II) donnée ci-dessus, en particulier ceux de formule (II) dans laquelle $R^1$ et $R^2$ sont des groupes alkyle de 3 à 18 atomes de carbone et $R^3$ et $R^4$ sont des groupes phényle.

A titre d'exemple de calixarènes utilisables, on peut citer ceux de formule :

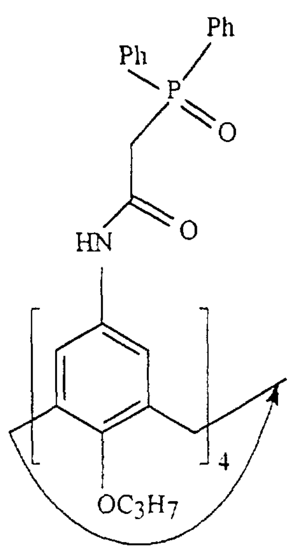
(III)

$A^4_3$

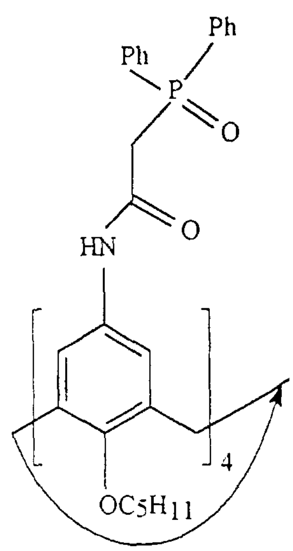
(IV)

$A^4_5$

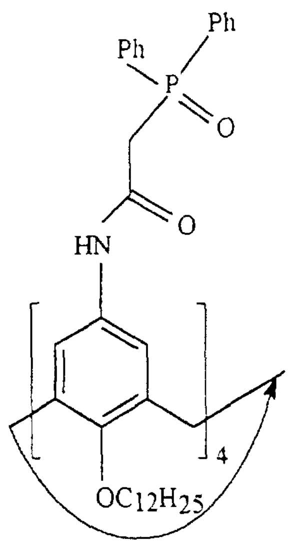
(V)

$A^4_{12}$

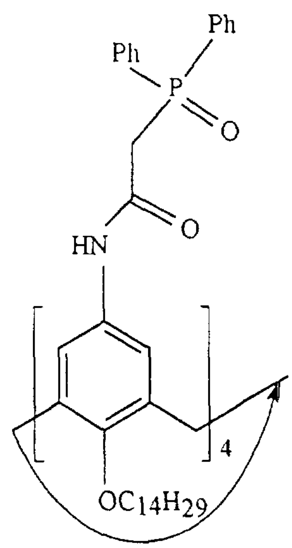
(VI)

$A^4_{14}$

dans lesquelles Ph représente le groupe phényle.

Avec les calixarènes utilisés dans l'invention, la longueur de la chaîne $R^1$ peut être variable car on a remarqué que la longueur de cette chaîne n'avait pratiquement aucune influence sur la capacité d'extraction du calixarène vis-à-vis des éléments du groupe des lanthanides et des actinides.

Selon l'invention, la concentration en calixarène de la phase organique dépend en particulier du diluant organique utilisé. Généralement, les concentrations en calixarène se situent dans la gamme allant de $10^{-4}$ à $5.10^{-2}$ mol/L.

Pour mettre en oeuvre le procédé de l'invention, on peut procéder de la manière suivante.

On prépare tout d'abord la phase organique non miscible à l'eau par dissolution du calixarène dans le diluant utilisé, puis on mélange la solution aqueuse contenant les métaux à séparer avec la phase organique et on soumet le mélange à une agitation pendant au moins 10 minutes à une température de 10°C à 35°C. On sépare ensuite les deux phases par centrifugation du mélange à une vitesse d'au moins 2500 tr/min, par exemple de 3000 tr/min, pendant environ 5 minutes.

Selon l'invention, pour améliorer le taux d'extraction du et des métaux M1 dans la phase organique, on peut réaliser la mise en contact de la phase organique avec la solution aqueuse dans une pluralité d'étages pour enrichir dans chaque étage la phase organique en métal ou en métaux M1. Après chaque mise en contact, on sépare la phase liquide organique de la solution aqueuse. L'ensemble des opérations peut être effectué dans des appareillages classiques d'extraction liquide-liquide tels que des mélangeurs-décanteurs et des extracteurs centrifuges.

Après séparation de la phase organique enrichie en métal ou en métaux M1, on peut récupérer ceux-ci dans une solution aqueuse de réextraction par mise en contact de la phase organique séparée avec une solution aqueuse de réextraction, suivie d'une séparation de la phase organique et de la solution de réextraction. Ces opérations peuvent être effectuées comme précédemment. La solution aqueuse de réextraction est de préférence une solution aqueuse d'un acide minéral, ayant un pH $\leq$ 4.

A titre d'exemple de solutions aqueuses de réextraction, on peut citer les solutions d'acide nitrique comprenant $10^{-4}$ à $10^{-1}$ mol/L d'acide nitrique, en particulier la solution d'acide nitrique à $10^{-2}$ mol/L.

L'emploi d'une telle solution aqueuse de réextraction est très avantageux par rapport à l'utilisation d'une solution aqueuse contenant un agent complexant telle que les solutions aqueuses de réextraction utilisées dans FR-A-2 729 958.

En effet, la solution aqueuse de réextraction de l'invention est non complexante ; elle ne contient pas d'espèce organique telle que les complexants organiques utilisés dans FR-A-2 729 958 (acide méthylène diphosphonique, acide oxalique, acide citrique, oxalate ou citrate) ; elle est très faiblement concentrée en acide minéral et de surcroît elle est plus économique.

D'autres caractéristiques et avantages de l'invention apparaîtront mieux à la lecture de la description qui suit donnée bien entendu à titre illustratif et non limitatif, en référence aux dessins annexés.

## Brève description des dessins

La figure 1 est un graphique illustrant l'évolution des coefficients de distribution des métaux de terres rares, en fonction de leur rayon ionique, pour deux solutions aqueuses de départ, trois diluants organiques différents et une concentration en calixarène $\mathbf{A}_5^4$ de $10^{-3}$ mol/L.

La figure 2 est un graphique illustrant également l'évolution des coefficients de distribution des métaux de terre rares en fonction de leur rayon ionique, pour deux solutions aqueuses de départ, trois diluants différents et une concentration en calixarène $\mathbf{A}_5^4$ de $3.10^{-4}$ mol/L.

La figure 3 est un graphique illustrant l'évolution des coefficients de distribution des métaux de terres rares, en fonction de leur rayon ionique, pour deux solutions aqueuses de départ, trois diluants organiques différents et une concentration en calixarène $\mathbf{A}_5^4$ de $10^{-4}$ mol/L.

La figure 4 est un diagramme illustrant les variations du coefficient de distribution D de La, Am, Pm, Sm, Eu, Gd, Tb, Ho, Er et Yb en fonction de la concentration en calixarène $\mathbf{A}_5^4$ de la phase organique utilisant le chloroforme comme diluant.

## Exposé détaillé des modes de réalisation

Pour mettre en oeuvre le procédé de l'invention, il convient tout d'abord de choisir le diluant organique et la concentration en calixarène qui permettront d'obtenir une séparation entre le ou les métaux M1 et le ou les métaux M2.

Dans ce but, on détermine les coefficients de distribution des lanthanides et des actinides pour les deux diluants suivants :

- chloroforme, et
- octanol,

en utilisant des concentrations différentes de calixarène dans la phase organique, et une solution aqueuse comprenant par exemple $10^{-6}$ mol/L et entre $10^{-9}$ et $3.10^{-2}$ mol/L pour les éléments en possédant pas d'isotopes stables, constituée :

- soit par un milieu salin comprenant 4 mol/L de $NaNO_3$ et $10^{-2}$ mol/L de $HNO_3$,
- soit un milieu acide constitué par une solution aqueuse comprenant 3 mol/L d'acide nitrique.

Pour déterminer ces coefficients de distribution D, on met en contact 1,5 mL de la solution aqueuse contenant le métal avec 1,5 mL de phase organique liquide constituée de chloroforme ou d'octanol ayant une concentration en calixarène de $10^{-4}$, $3.10^{-4}$ ou $10^{-3}$ mol/L.

On effectue la mise en contact dans un tube à hémolyse en verre de 6 mL que l'on soumet à une agitation à une température de 25°C. Après une demi-heure de mise en contact, on sépare les deux phases par centrifugation et on détermine l'activité de chaque phase par scintillation liquide ou par spectrométrie $\alpha$, $\beta$ ou $\gamma$.

Le calixarène utilisé est le calixarène $\mathbf{A}_5^4$ répondant à la formule (IV) donnée ci-dessus.

La figure 1 illustre les résultats obtenus pour une concentration en calixarène $\mathbf{A}_5^4$ de $10^{-3}$ mol/L dans du chloroforme ou de l'octanol. Elle donne également à titre comparatif les résultats obtenus lorsque le diluant est de l'orthonitrophény hexyl éther (NPHE) au lieu du chloroforme ou de l'octanol.

Sur cette figure, on a représenté en abscisse les éléments de terres rares dans l'ordre décroissant de leurs rayons ioniques et en ordonnée les coefficients de distribution.

Les points représentés sur cette figure se réfèrent aux résultats obtenus pour la solution aqueuse de départ constituée par le milieu salin, et pour la solution aqueuse de départ constituée par le milieu acide ($HNO_3$, 3M).

Ces points sont différenciés par les symboles suivants :

- triangle noir : milieu salin, diluant $CHCl_3$,
- triangle blanc : milieu acide, diluant $CHCl_3$,
- carré noir : milieu salin, diluant octanol,
- carré blanc : milieu acide, diluant octanol,
- cercle noir : milieu salin, diluant NPHE,
- cercle blanc : milieu acide, diluant NPHE.

Au vu de ces résultats, on constate que l'emploi d'un diluant tel que le chloroforme et l'octanol permet d'obtenir une séparation des lanthanides lorsqu'on utilise le calixarène à une concentration de $10^{-3}$ mol/L. En revanche, cette séparation est impossible avec le diluant de l'art antérieur, NPHE.

Ainsi, pour un milieu salin, on peut séparer des métaux M1 choisis parmi La, Am, Ce, Pr, Nd, Pm, Sm, Eu et Gd.

La figure 2 illustre les résultats obtenus avec les mêmes diluants et les mêmes solutions aqueuses de départ lorsque la concentration en calixarène $\mathbf{A}_5^4$ est de $3.10^{-4}$ mol/L.

La figure 2 montre ainsi que l'on peut obtenir une séparation des lanthanides, notamment quand on utilise le chloroforme comme diluant avec une concentration en calixarène de $3.10^{-4}$ mol/L.

La figure 3 illustre les résultats obtenus avec une concentration en calixarène $\mathbf{A}_5^4$ de $10^{-4}$ mol/L.

L'examen de la figure 3 montre que l'on peut obtenir une séparation satisfaisante des lanthanides en utilisant l'octanol comme diluant.

Par ailleurs, on remarque que, dans le cas des calixarènes, les éléments légers dont le rayon ionique est plus élevé sont mieux extraits, contrairement à ce que l'on obtient avec l'acide di(2-éthylhexyl) phosphorique utilisé dans l'art antérieur qui privilégie l'extraction des éléments lourds de rayon ionique plus faible.

Sur la figure 4, on a représenté les variations du coefficient de distribution D en fonction de la concentration en calixarène $\mathbf{A}_5^4$ pour les éléments La, Am, Pm, Sm, Eu, Gd, Tb, Ho, Er et Yb extraits à partir d'un milieu salin de la même composition que précédemment, en utilisant le chloroforme comme diluant.

L'examen de cette figure montre que de nombreuses séparations peuvent être effectuées en choisissant de façon appropriée la concentration en calixarène pour avoir un coefficient de distribution D supérieur à 1 pour certains éléments et un coefficient de distribution D inférieur à 1 pour d'autres éléments.

Ainsi, pour une concentration en calixarène de $10^{-3}$ mol/L, on peut effectuer une séparation du lanthane et de l'ytterbium très satisfaisante puisque le coefficient de distribution du lanthane est dans ce cas de 140 alors que le coefficient de distribution de l'ytterbium est inférieur à 0,19.

Dans le cas où l'on désire séparer l'américium de l'europium, on peut choisir une concentration en calixarène $\mathbf{A}_5^4$ de $3.10^{-4}$ mol/L, pour laquelle $D_{Am}$ est de 3,47 alors que $D_{Eu}$ est de $4,72.10^{-1}$.

L'examen des figures 1 à 3 montre que, dans le cas d'un milieu salin de départ, on peut séparer des métaux M1 choisis dans le groupe constitué des lanthanides trivalents et des actinides Am(III) et Cm(III).

Dans ce cas, on peut utiliser comme diluant le chloroforme ou l'octanol.

Lorsque la solution aqueuse de départ est une solution acide, on peut séparer des métaux M1 choisis parmi La-, Ce, Pr, Nd, Pm, Sm et Eu, par exemple en utilisant du chloroforme et une concentration en calixarène de $3.10^{-4}$ mol/L.

Le procédé de l'invention présente donc de nombreux avantages par rapport au procédé antérieur décrit dans FR-A-2 729 958 où l'on utilisait un nitrophényl alkyl éther comme diluant et une solution de complexant pour la réextraction.

En effet, grâce au choix du diluant, de la concentration en calixarène et d'une solution aqueuse légèrement acide pour la réextraction, on peut séparer les actinides et lanthanides entre eux à partir de milieux aqueux divers (acides ou salins) sans addition d'espèces organiques gênantes tels que des complexants.

Les exemples qui suivent illustrent des séparations effectuées par le procédé de l'invention.

**Exemple 1 : séparation du lanthane et de l'ytterbium.**

Dans cet exemple, on sépare ces deux éléments de terres rares à partir d'une solution aqueuse constituée par un milieu salin comprenant 4 mol/L de $NaNO_3$ et 0,01 mol/L de $HNO_3$.

Pour cette séparation, on utilise une phase organique constituée par du chloroforme contenant $10^{-3}$ mol/L du calixarène $\mathbf{A}_5^4$. En effet, de la figure 1 montre que l'on peut obtenir cette séparation avec le chloroforme en utilisant cette concentration. En effet, pour cette concentration en calixarène, le coefficient de distribution du lanthane est de 140 alors que le coefficient de distribution de l'ytterbium et de 0,2.

Après extraction, le pourcentage de lanthane extrait est égal à $\frac{D}{1+D}$***100**

On extrait donc 99,9 % du lanthane et 16,6 % de l'ytterbium dans la phase organique. On peut réaliser ensuite la réextraction avec de l'acide nitrique 0,01 M.

**Exemple 2 : séparation du lanthane et de l'ytterbium.**

Dans cet exemple, on suit le même mode opératoire que dans l'exemple 1, mais la phase organique est constituée par du chloroforme contenant $3.10^{-4}$ mol/L du même calixarène.

L'examen de la figure 2 montre que dans ces conditions, le coefficient de distribution du lanthane est égal à 15 alors que le coefficient de distribution de l'ytterbium est de 0,02.

On extrait ainsi 93,8 % du lanthane et 2 % de l'ytterbium.

On peut réaliser comme précédemment la réextraction avec de l'acide nitrique $10^{-2}$ M, on peut ainsi faire passer la composition de la solution aqueuse de 50-50 % de lanthane et d'ytterbium à 93 % de lanthane et 2 % d'ytterbium.

**Exemple 3 : séparation de l'europium et du gadolinium.**

Dans cet exemple, on part d'une solution aqueuse constituée par un milieu salin à 4 mol/L de $NaNO_3$ et 0,01 mol/L de $HNO_3$.

Si l'on se reporte à la figure 4, on voit que l'on peut réaliser la séparation europium/gadolinium en utilisant comme diluant le chloroforme et une concentration en calixarène $\mathbf{A}_5^4$ de 4,6 $10^{-4}$ mol/L. Dans ces conditions, le coefficient de distribution de l'europium est de 1,12 et le coefficient de distribution du gadolinium est de 0,88. Le pourcentage d'europium extrait sera donc de 52,8 % et le pourcentage de gadolinium extrait de 46,8 %. En réalisant la réextraction par de l'acide nitrique 0,01 N et en soumettant la solution aqueuse de réextraction (après lui avoir ajouté 4 mol/L de $NaNO_3$) une extraction par la même phase organique, puis en renouvelant plusieurs fois ces opérations, on obtient un enrichissement supérieur de la phase organique en europium et une bonne séparation.

**Exemple 4 : séparation de l'europium.**

Dans cet exemple, on étudie l'influence de la concentration en europium et en calixarène sur la séparation de l'europium à partir d'un milieu acide ($HNO_3$ 3M) et/ou d'un milieu salin ($NaNO_3$ 4M, $HNO_3$ 0,01 M). Pour réaliser l'extraction, on met en contact 2 mL de la solution aqueuse comprenant $10^{-6}$ ou $10^{-4}$ mol/L de l'europium avec 2 mL de la phase organique constituée du calixarène $\mathbf{A}_3^4$ de formule (III) dissous dans du chloroforme à une concentration de $10^{-3}$ ou $10^{-2}$ mol/L. On détermine par comptage sur 0,5 mL de phase organique et 1 mL de phase aqueuse les activités en europium des deux phases pour calculer le coefficient D de distribution. On soumet ensuite 1,25 mL de la phase organique à une réextraction par 2,5 mL de solution aqueuse de réextraction constituée par de l'acide nitrique 0,01 M. Après réextraction, on détermine les activités en europium sur 0,5 mL de la phase organique et sur 1 mL de la phase aqueuse. On détermine ainsi, le coefficient D de réextraction de l'europium.

Les résultats obtenus sont donnés dans le tableau 1 qui suit pour deux concentrations en calixarène $\mathbf{A}_3^4$ et deux concentrations en europium.

Ces résultats montrent que l'on obtient de bons taux d'extractions et de réextraction de l'europium.

**Exemple 5 : séparation de l'europium.**

Dans cet exemple, on étudie également l'influence de la concentration en europium, de la concentration en calixarène et de la nature de la solution de départ (milieu acide ou milieu salin) sur l'extraction de l'europium en utilisant comme calixarène le calixarène $\mathbf{A}_5^4$ de formule (IV) dans du chloroforme, une solution d'acide nitrique 0,01 M pour la réextraction et un milieu acide ou un milieu salin de même composition que dans l'exemple 4.

On procède de la façon suivante.

Pour l'extraction on met en contact 2 mL de la solution aqueuse avec 2 mL de la phase organique, puis on détermine l'activité de l'europium par comptage sur 0,5 mL de phase organique et 1 mL de phase aqueuse. On réalise la réextraction par un volume double de solution aqueuse en mettant en contact 1,25 mL de la phase organique précédente avec 2,5 mL de la solution aqueuse de réextraction, et on détermine l'activité de l'europium par comptage sur 1 mL de phase organique et 1 mL de solution aqueuse.

Les résultats obtenus avec deux concentrations en calixarène $\mathbf{A}_5^4$, deux concentrations en europium et un milieu de départ acide ou salin sont donnés dans le tableau 2.

**Exemple 6 : séparation de l'europium.**

Dans cet exemple, on étudie l'influence de la concentration en europium et de la concentration en calixarène sur l'extraction de l'europium à partir d'un milieu acide ou d'un milieu salin de même composition que dans l'exemple 4 en utilisant comme calixarène le calixarène $\mathbf{A}_{12}^4$ de formule (V).

On suit le même mode opératoire que dans l'exemple 5, sauf que l'on réalise la réextraction volume à volume en utilisant 1,25 mL de phase organique et 1,25 mL de solution aqueuse de réextraction.

Les résultats obtenus sont donnés dans le tableau 3.

**Exemple 7 : séparation de l'europium.**

Dans cet exemple, on extrait l'europium à partir d'une solution aqueuse acide ou d'une solution saline ayant les mêmes compositions que celles données dans l'exemple 4, en utilisant comme phase organique, le calixarène $\mathbf{A}_{12}^4$ de formule (V) à une concentration de $10^{-3}$ mol/L ou $10^{-2}$ mol/L dans du 1-octanol.

On réalise l'extraction en mettant en contact 1,5 mL de solution aqueuse avec 1,5 mL de phase liquide organique et on détermine l'activité de l'europium par comptage sur 1 mL de phase organique et 1 mL de phase aqueuse.

On réalise ensuite la réextraction de l'europium extrait dans la phase organique en mettant en contact 0,8 mL de la phase organique avec 0,8 mL d'acide nitrique 0,01 M. On détermine ensuite l'activité des phases organiques et aqueuses par comptage sur 0,5 mL de phase dans chaque cas.

Les résultats obtenus sont donnés dans le tableau 4. Au vu des résultats du tableau 4, on voit que la réextraction est bonne lorsque l'extraction a été réalisée depuis un milieu acide et plutôt bonne dans le cas d'un milieu salin aussi longtemps que la concentration en calixarène est faible.

**Exemple 8 : séparation de l'américium.**

Dans cet exemple, on utilise comme phase liquide d'extraction du 1-octanol contenant $10^{-3}$ mol/L ou $10^{-2}$ mol/L du calixarène $\mathbf{A}^{4}_{12}$. La phase aqueuse est constituée par une solution acide ou un milieu salin de la même composition que celle des exemples précédents contenant $2.10^{-9}$ mol/L d'américium.

On réalise l'extraction en mettant en contact 1,5 mL de la solution aqueuse avec 1,5 mL de phase organique, puis on détermine l'activité en américium sur 100 µL de chaque phase dans 14,9 mL de liquide scintillant. On réalise la réextraction de l'américium en mettant en contact 1,25 mL de phase organique avec 2,5 mL de solution d'acide nitrique 0,01 M et on détermine l'activité des deux phases après réextraction sur 100 µL de chaque phase dans 14,9 mL de liquide scintillant.

Les résultats obtenus sont donnés dans le tableau 5.

**Exemple 9 : séparation du curium.**

On suit le même mode opératoire que dans l'exemple précédent pour séparer le curium à partir d'une solution aqueuse acide ou saline, en utilisant la même phase organique et la même solution de réextraction.

Les résultats obtenus sont donnés dans le tableau 6.

**Exemple 10 : séparation de l'europium.**

Dans cet exemple, on sépare l'europium d'une solution aqueuse acide (acide nitrique 3M) ou saline (nitrate de sodium 4M) en utilisant une phase liquide organique constituée du calixarène $\mathbf{A}^{4}_{12}$ à une concentration de $10^{-2}$ mol/L dans l'isotridécanol. Pour dissoudre le calixarène dans cette phase organique on le dissout préalablement dans un mélange de chloroforme et d'isotridécanol, puis on évapore le chloroforme. On réalise l'extraction et la réextraction dans les mêmes conditions que celles de l'exemple 7.

Les résultats obtenus sont donnés dans le tableau 7.

On constate ainsi que l'extraction est excellente pour les deux milieux et que la réextraction est meilleure dans le cas du milieu salin.

**Exemple 11 : séparation du lanthane, du samarium, du gadolinium, de l'holmium, de l'erbium, et de l'américium.**

Pour choisir la phase liquide organique susceptible d'assurer cette séparation, on peut se reporter à la figure 4 qui montre que pour extraire préférentiellement le lanthane, il convient d'utiliser une concentration en calixarène de $1{,}41.10^{-4}$ mol/L dans du chloroforme. Dans ce cas, les coefficients de distribution des éléments sont les suivants :

$D_{La}$ = 1,7
$D_{Sm}$ = 0,21
$D_{Gd}$ = 0,14
$D_{Ho}$ = 0,02
$D_{Er}$ = 0,02, et
$D_{Am}$ = 0,84.

Les pourcentages des métaux extraits sont donc de :

63 % de lanthane,
17 % de samarium,
12 % de gadolinium,
2 % d'holmium,
1,9 % d'erbium et
45 % d'américium.

On peut poursuivre le traitement de la phase organique, en effectuant une réextraction, puis de nouveaux cycles d'extraction-réextraction plusieurs fois pour séparer sélectivement le lanthane des autres métaux.

On procède ensuite à la séparation de l'américium en utilisant une concentration de 3.10$^{-4}$ mol/L de calixarène dans le chloroforme. Dans ces conditions, les coefficients de distribution des différents éléments sont les suivants :

$D_{Sm}$ = 0,8
$D_{Gd}$ =0,4
$D_{Ho}$ = 0,06
$D_{Er}$ = 0, 05 et
$D_{Am}$ = 3,5.

En réalisant ainsi l'extraction, on peut extraire :

78 % de l'américium,
44 % de samarium,
28,5 % de gadolinium
6 % d'holmium, et
5 % d'erbium.

Ceci permet d'extraire sélectivement l'américium et de le séparer de la solution après plusieurs cycles d'extraction-réextraction.

Tableau 1

| Concent. en Extract. $A_{3}^{4}$ | Concentration en Eu | Milieu | Dext. | Dréext. | % ext. | % réext. |
|---|---|---|---|---|---|---|
| $10^{-3}$ M | $10^{-6}$ M | acide | 19,3 | $6{,}37.10^{-4}$ | 95,1 | 99,9 |
| " | $10^{-4}$ M | acide | 11,9 | $5{,}78.10^{-4}$ | 92,2 | 99,9 |
| $10^{-2}$ M | $10^{-6}$ M | acide | 838 | $4{,}90.10^{-3}$ | 99,9 | 99,5 |
| " | $10^{-4}$ M | acide | $1{,}08.10^{3}$ | $2{,}70.10^{-3}$ | 99,9 | 99,7 |
| $10^{-3}$ M | $10^{-6}$ M | salin | 4,11 | $1{,}82.10^{-3}$ | 80,5 | 99,8 |
| " | $10^{-4}$ M | salin | 3,93 | $4{,}70.10^{-4}$ | 79,7 | 99,9 |
| $10^{-2}$ M | $10^{-6}$ M | salin | $6{,}43.10^{2}$ | $3{,}24.10^{-3}$ | 99,8 | 99,7 |
| " | $10^{-4}$ M | salin | $5{,}94.10^{-2}$ | $1{,}23.10^{-3}$ | 99,8 | 99,9 |

Tableau 2

| Concent. en Extract. $A_{5}^{4}$ | Concentration en Eu | Milieu | Dext. | Dréext. | % ext. | % réext. |
|---|---|---|---|---|---|---|
| $10^{-3}$ M | $10^{-6}$ M | acide | 16,61 | $2{,}10.10^{-3}$ | 94,3 | 99,8 |
| " | $10^{-4}$ M | acide | 10,8 | $7{,}38.10^{-4}$ | 91,5 | 99,9 |
| $10^{-2}$ M | $10^{-6}$ M | acide | $6{,}53.10^{2}$ | $9{,}4.10^{-3}$ | 99,9 | 99,1 |
| " | $10^{-4}$ M | acide | $9{,}27.10^{2}$ | $5{,}48.10^{-3}$ | 99,9 | 99,5 |
| $10^{-3}$ M | $10^{-6}$ M | salin | 3,40 | $2{,}31.10^{-3}$ | 77,3 | 99,8 |
| " | $10^{-4}$ M | salin | 3,27 | - | 76,6 | - |
| $10^{-2}$ M | $10^{-6}$ M | salin | $4{,}77.10^{2}$ | $5{,}78.10^{-3}$ | 99,8 | 99,4 |
| " | $10^{-4}$ M | salin | $6{,}01.10^{2}$ | $3{,}96.10^{-3}$ | 99,8 | 99,6 |

Tableau 3

| Concent. en Extract. $A_{12}^{4}$ | Concentration en Eu | Milieu | Dext. | Dréext. | % ext. | % réext. |
|---|---|---|---|---|---|---|
| $10^{-3}$ M | $10^{-6}$ M | acide | 22,9 | $4{,}17.10^{-3}$ | 95,8 | 99,6 |

Tableau 3 (suite)

| Concent. en Extract. $A_{12}^{4}$ | Concentration en Eu | Milieu | Dext. | Dréext. | % ext. | % réext. |
|---|---|---|---|---|---|---|
| " | $10^{-4}$ M | acide | 15,1 | $9,30.10^{-4}$ | 93,8 | 99,9 |
| $10^{-2}$ M | $10^{-6}$ M | acide | $1,46.10^{3}$ | - | 99,9 | - |
| " | $10^{-4}$ M | acide | $1,18.10^{3}$ | $1,25.10^{-2}$ | 99,9 | 98,8 |
| $10^{-3}$ M | $10^{-6}$ M | salin | 4,90 | $3,80.10^{-3}$ | 83,0 | 99,6 |
| " | $10^{-4}$ M | salin | 3,84 | $9,41.10^{-4}$ | 79,3 | 99,9 |
| $10^{-2}$ M | $10^{-6}$ M | salin | $5,36.10^{2}$ | $2,10.10^{-2}$ | 99,8 | 97,9 |
| " | $10^{-4}$ M | salin | $7,37.10^{2}$ | $6,75.10^{-3}$ | 99,9 | 99,3 |

Tableau 4

| Concentration en extradant $A_{12}^{4}$ | Milieu | Dext. | Dréext. | % ext. | % réext. |
|---|---|---|---|---|---|
| $10^{-3}$ M | salin | 80,8 | $8,2.10^{-3}$ | 98,8 | 99,2 |
| $10^{-2}$ M | salin | 1440 | 0,21 | 99,8 | 82,2 |
| $10^{-3}$ M | acide | 0,51 | 0,20 | 33,8 | 83,1 |
| $10^{-2}$ M | acide | 25,3 | 6,7 | 96,2 | 13,0 |

Tableau 5

| Concentrat en extractant $A_{12}^{4}$ | Milieu | Dext. | Dréext. | % ext. | % réext. |
|---|---|---|---|---|---|
| $10^{-3}$ M | acide | 2,4 | 1,4 | 70,5 | 42,3 |
| $10^{-2}$ M | acide | 170 | 7,6 | 99,4 | 1,3 |
| $10^{-3}$ M | salin | 70 | 0,018 | 98,6 | 98,3 |
| $10^{-2}$ M | salin | 2800 | 1,14 | 99,9 | 46,8 |

Tableau 6

| Concentration en $A_{12}^{4}$ | Milieu | Dext. | Dréext. | % ext. | % réext. |
|---|---|---|---|---|---|
| $10^{-3}$ M | acide | 1 | 0,55 | 50,1 | 64,6 |
| $10^{-2}$ M | acide | 70 | 32,5 | 98,6 | 3,0 |
| $10^{-3}$ M | salin | 280 | 0,011 | 99,6 | 98,9 |
| $10^{-2}$ M | salin | 1 050 | 0,49 | 99,9 | 67,2 |

Tableau 7

| Concentrat en $A_{12}^{4}$ | Milieu | Dext. | Dréext. | % ext. | % réext. |
|---|---|---|---|---|---|
| $10^{-2}$ M | acide | 128 | 9,5 | 99,2 | 9,5 |
| $10^{-2}$ M | salin | 2300 | 0,075 | 99,9 | 93,0 |

## Revendications

**1.** Procédé de séparation d'au moins un métal M1 choisi dans le groupe des actinides et des lanthanides d'au moins un métal M2 choisi dans ce même groupe à partir d'une solution aqueuse contenant M1 et M2, qui comprend les

étapes suivantes :

- a) mettre en contact la solution aqueuse desdits métaux M1 et M2 avec une phase liquide organique comprenant

- au moins un calixarène de formule :

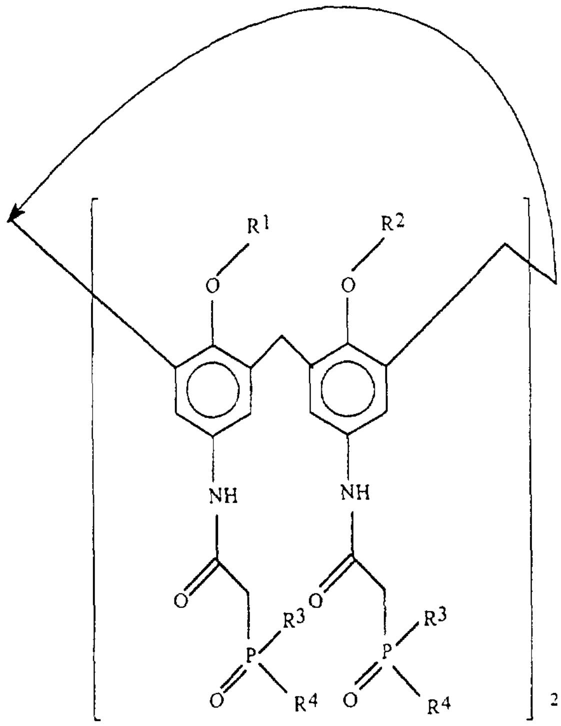

(II)

dans laquelle :

- $R^1$ et $R^2$ qui peuvent être identiques ou différents, sont des groupes alkyle ou o-nitrophénoxyalkyle, et
- $R^3$ et $R^4$ qui peuvent être identiques ou différents, sont des groupes aryle ; et

- un diluant organique choisi parmi les alcools lourds de formule $C_nH_{2n}O$ avec n allant de 7 à 13, le chloroforme, le dichlorométhane, le 1,2-dichloroéthane, et leurs mélanges,
- la concentration en calixarène étant située dans la gamme allant de $10^{-4}$ à $5.10^{-2}$ mol/L, et
ledit diluant et la concentration en calixarène de la phase organique étant choisis de façon telle que le coefficient de distribution du ou des métaux M1 entre cette phase organique et ladite solution aqueuse soit supérieur à 1 et que le coefficient de distribution du ou des métaux M2 entre cette phase organique et ladite solution aqueuse soit inférieur à 1 ; et

- b) séparer ladite solution aqueuse de ladite phase organique.

**2.** Procédé selon la revendication 1 dans lequel ledit diluant organique est tel que pour une concentration en calixarène de la phase organique de $10^{-4}$ à $10^{-3}$ mol/L, le coefficient de distribution du gadolinium entre cette phase organique et une solution aqueuse de gadolinium est de 0,5 à 5.

**3.** Procédé selon la revendication 1 ou 2, dans lequel le diluant organique est le chloroforme ou l'octanol.

**4.** Procédé selon l'une quelconque des revendications 1 à 3, dans lequel le calixarène répond à la formule (I) dans laquelle $R^1$ et $R^2$ sont des groupes alkyle de 3 à 18 atomes de carbone, et $R^3$ et $R^4$ représentent le groupe phényle.

**5.** Procédé, selon l'une quelconque des revendications 1 à 4, qui comprend en outre l'étape c) de réextraction des

métaux extraits dans la phase organique par mise en contact de la phase organique séparée dans l'étape b) avec une solution aqueuse d'un acide minéral de pH inférieur ou égal à 4, dite solution aqueuse de réextraction.

**6.** Procédé selon la revendication 5, dans lequel la solution aqueuse de réextraction est une solution d'acide nitrique ayant une concentration en acide nitrique de $10^{-4}$ à $10^{-1}$ mol/L.

**7.** Procédé selon l'une quelconque des revendications 1 à 6, dans lequel la solution aqueuse de départ étant une solution saline, les métaux M1 sont choisis dans le groupe constitué des lanthanides trivalents et des actinides Am(III) et Cm(III).

**8.** Procédé selon la revendication 7, dans lequel de diluant est le chloroforme ou l'octanol.

**9.** Procédé selon l'une quelconque des revendications 1 à 8, dans lequel solution aqueuse de départ étant une solution acide, le(s) métaux M1 sont choisis parmi La, Ce, Pr, Nd, Pm, Sm et Eu.

**10.** Procédé selon la revendication 9, dans lequel le diluant est le chloroforme et la concentration en calixarène est de $3.10^{-4}$ mol/L.

**11.** Procédé selon la revendication 1 dans lequel M1 est l'américium, M2 est l'europium, la solution aqueuse de départ est une solution saline, le diluant est le chloroforme et la concentration en calixarène est $3.10^{-4}$ mol/L.

**Patentansprüche**

**1.** Verfahren zur Abtrennung mindestens eines Metalls M1, gewählt in der Gruppe der Actiniden und der Lanthaniden, von mindestens einem Metall M2, gewählt in derselben Gruppe, aus einer wässrigen, M1 und M2 enthaltenden Lösung, das die folgenden Schritte umfasst:

- a) die wässrige Lösung der genannten Metalle M1 und M2 mit einer flüssigen organischen Phase in Kontakt zu bringen, enthaltend:

  - mindestens ein Calixaren der Formel:

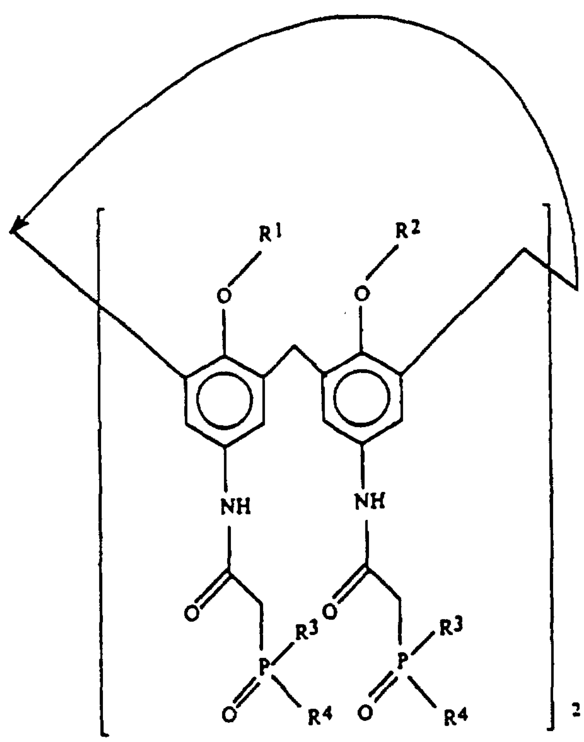

(II)

worin:

- $R^1$ und $R^2$, die identisch oder verschieden sein können, Alkyl- oder o-Nitrophenoxyalkylgruppen sind und
- $R^3$ und $R^4$, die identisch oder verschieden sein können, Arylgruppen sind,

und

- ein organisches Verdünnungsmittel, gewählt unter den schweren Alkoholen der Formel $C_nH_{2n}O$ mit von 7 bis 13 gehendem n, Dichlormethan, 1,2-Dichlorethan und ihren Mischungen,
- wobei die Calixaren-Konzentration in dem Bereich von $10^{-4}$ bis $5.10^{-2}$ mol/l liegt,

und das genannte Verdünnungsmittel und die Calixaren-Konzentration der organischen Phase derart gewählt sind, dass der Verteilungskoeffizient des oder der Metalle M1 zwischen dieser organischen Phase und der genannten wässrigen Lösung größer als 1 ist und der Verteilungskoeffizient des oder der Metalle M2 zwischen dieser organischen Phase und der genannten wässrigen Lösung kleiner als 1 ist;
und
- b) die genannte wässrige Lösung von der genannten organischen Phase abzutrennen.

**2.** Verfahren nach Anspruch 1, in welchem das genannte organische Verdünnungsmittel derart ist, dass für eine Calixaren-Konzentration der organischen Phase von $10^{-4}$ bis $10^{-3}$ mol/l der Verteilungskoeffizient des Gadoliniums zwischen dieser organischen Phase und einer wässrigen Gadolinium-Lösung 0,5 bis 5 beträgt.

**3.** Verfahren nach Anspruch 1 oder 2, in welchem das organische Verdünnungsmittel Chloroform oder Octanol ist.

**4.** Verfahren nach einem der Ansprüche 1 bis 3, in welchem das Calixaren der Formel (II) entspricht, worin $R^1$ und $R^2$ Alkylgruppen von 3 bis 18 Kohlenstoffatomen sind und $R^3$ und $R^4$ die Phenylgruppe darstellen.

**5.** Verfahren nach einem der Ansprüche 1 bis 4, das femer den Schritt c) der Reextraktion der in die organische Phase extrahierten Metalle durch In-Kontakt-Bringen der in Schritt b) abgetrennten organischen Phase mit einer wässrigen Lösung einer Mineralsäure vom pH kleiner als oder gleich 4 umfasst, genannt wässrige Reextraktionslösung.

**6.** Verfahren nach Anspruch 5, in welchem die wässrige Reextraktionslösung eine Lösung von Salpetersäure ist, die eine Salpetersäurekonzentration von $10^{-4}$ bis $10^{-1}$ mol/l hat.

**7.** Verfahren nach einem der Ansprüche 1 bis 6, in welchem die wässrige Ausgangslösung eine Salzlösung ist und die Metalle M1 in der aus den dreiwertigen Lanthaniden und den Actiniden Am(III) und Cm(III) bestehenden Gruppe gewählt sind.

**8.** Verfahren nach Anspruch 7, in welchem das Verdünnungsmittel Chloroform oder Octanol ist.

**9.** Verfahren nach einem der Ansprüche 1 bis 8, in welchem die wässrige Ausgangslösung eine saure Lösung ist und das oder die Metalle M1 unter La, Ce, Pr, Nd, Pm, Sm und Eu gewählt sind.

**10.** Verfahren nach Anspruch 9, in welchem das Verdünnungsmittel Chloroform ist und die Calixaren-Konzentration $3.10^{-4}$ mol/l beträgt.

**11.** Verfahren nach Anspruch 1, in welchem M1 Americium ist, M2 Europium ist, die wässrige Ausgangslösung eine Salzlösung ist, das Verdünnungsmittel Chloroform ist und die Calixaren-Konzentration $3.10^{-4}$ mol/l beträgt.

## Claims

**1.** Process for separating at least one metal M1 chosen from the group of actinides and lanthanides from at least one metal M2 in the same group from an aqueous solution containing M1 and M2, which includes the following steps:

- a) contacting the aqueous solution of said metals M1 and M2 with an organic liquid phase including

- at least one calixarene of formula:

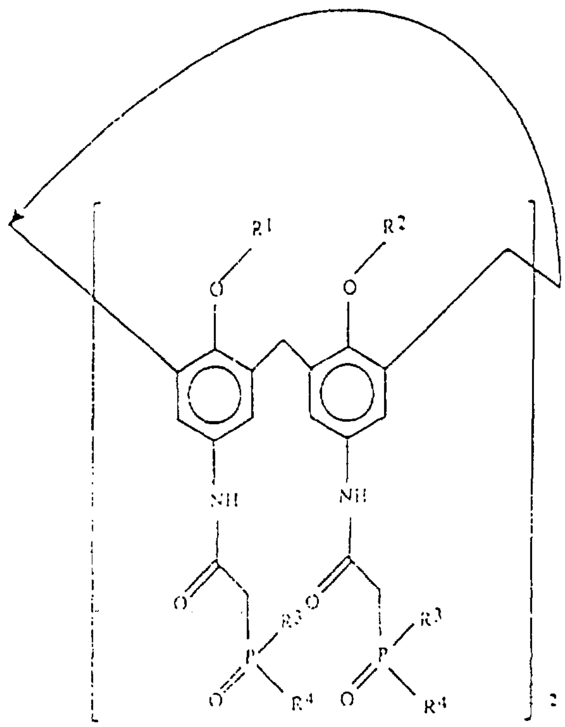

(II)

in which

- $R^1$ and $R^2$ which can be identical or different, are alkyl or o-nitrophenoxyalkyl groups, and
- $R^3$ and $R^4$ which can be identical or different, are aryl groups; and

- an organic diluent chosen from among the heavy alcohols of formula $C_nH_{2n}O$ with n between 7 and 13, chloroform, dichloromethane, 1,2-dichloromethane and their mixtures, the calixarene concentration being in the range $10^{-4}$ to $5.10^{-2}$ mol/L and said diluent and the calixarene concentration of the organic phase being chosen so that the distribution coefficient of the metal(s) M1 between this organic phase and the said aqueous solution is greater than 1 and the distribution coefficient of the metal(s) M2 between said organic phase and said aqueous solution is less than 1; and

- b) separating the said aqueous solution from the said organic phase.

**2.** Process according to claim 1, in which the said organic diluent is such that for a calixarene concentration in the organic phase of $10^{-4}$ to $10^{-3}$ mol/L, the distribution coefficient of gadolinium between this organic phase and an aqueous solution of gadolinium is from 0.5 to 5.

**3.** Process according to claim 1 or 2, in which the organic diluent is chloroform or octanol.

**4.** Process according to any of claim 1 to 3, in which the calixarene is based on formula (I) in which $R^1$ and $R^2$ are alkyl groups of 3 to 18 carbon atoms and $R^3$ and $R^4$ represent the phenyl group.

**5.** Process according to any of claims 1 to 4, which also includes step c) of re-extraction of metals extracted in the organic phase by contacting the organic phase separated in step b) with an aqueous solution of a mineral acid with a pH less than or equal to 4, called an aqueous re-extraction solution.

**6.** Process according to claim 5, in which the aqueous re-extraction solution is a nitric acid solution with a nitric acid concentration of $10^{-4}$ to $10^{-1}$ mol/L.

**7.** Process according to any of claims 1 to 6, in which the aqueous starting solution being a saline solution, the metals M1 are chosen from the group of trivalent lanthanides and actinides Am(III) and Cm(III).

**8.** Process according to claim 7, in which the diluent is chloroform or octanol.

**9.** Process according to any of claims 1 to 8, in which, the aqueous starting solution being acidic, the metal(s) M1 are chosen from La, Ce, Pr, Nd, Pm, Sm and Eu.

**10.** Process according to claim 9, in which the diluent is chloroform and the calixarene concentration is $3.10^{-4}$ mol/L.

**11.** Process according to claim 1, in which M1 is americium, M2 is europium, the aqueous starting solution is a saline solution, the diluent is chloroform and the calixarene concentration is $3.10^{-4}$ mol/L.

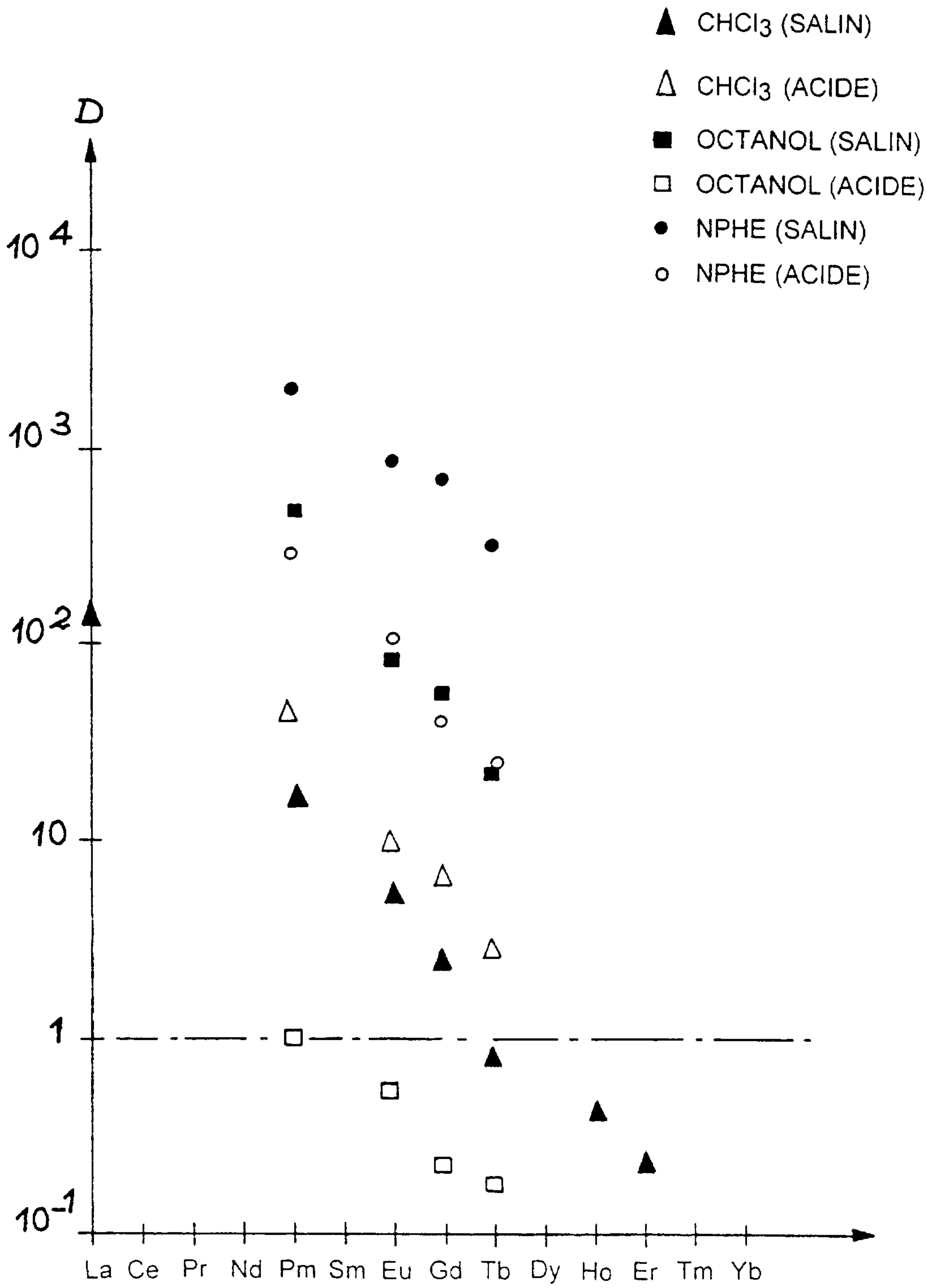
CHCl3 (SALIN)
CHCl3 (ACIDE)
OCTANOL (SALIN)
OCTANOL (ACIDE)
NPHE (SALIN)
NPHE (ACIDE)
D
10 4
10 3
10 2
10
1
10-1
La Ce Pr Nd Pm Sm Eu Gd Tb Dy Ho Er Tm Yb

FIG. 1

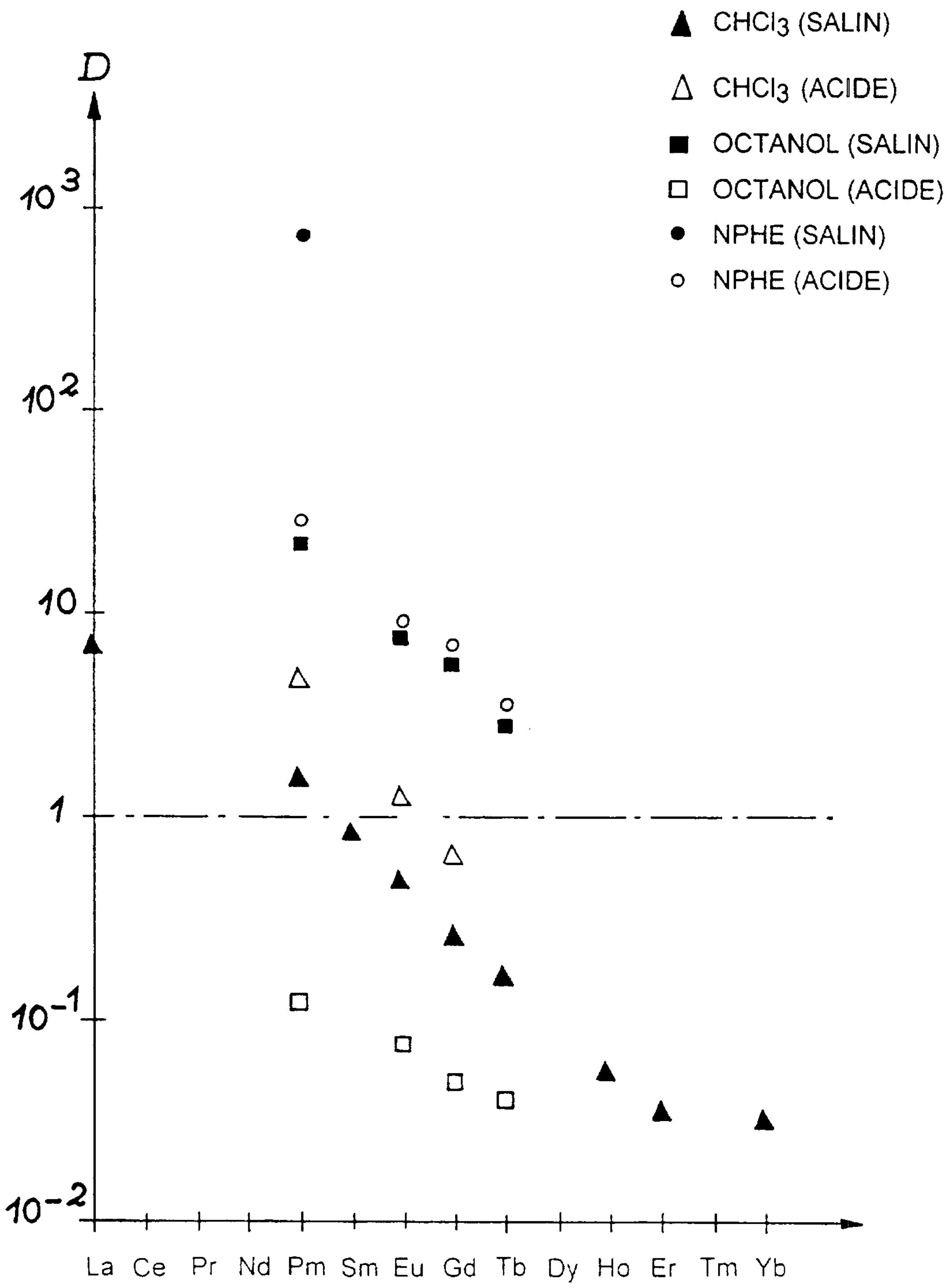
CHCl3 (SALIN)
CHCl3 (ACIDE)
OCTANOL (SALIN)
OCTANOL (ACIDE)
NPHE (SALIN)
NPHE (ACIDE)
D
10 3
10 2
10
1
10 -1
10 -2
La Ce Pr Nd Pm Sm Eu Gd Tb Dy Ho Er Tm Yb

FIG. 2

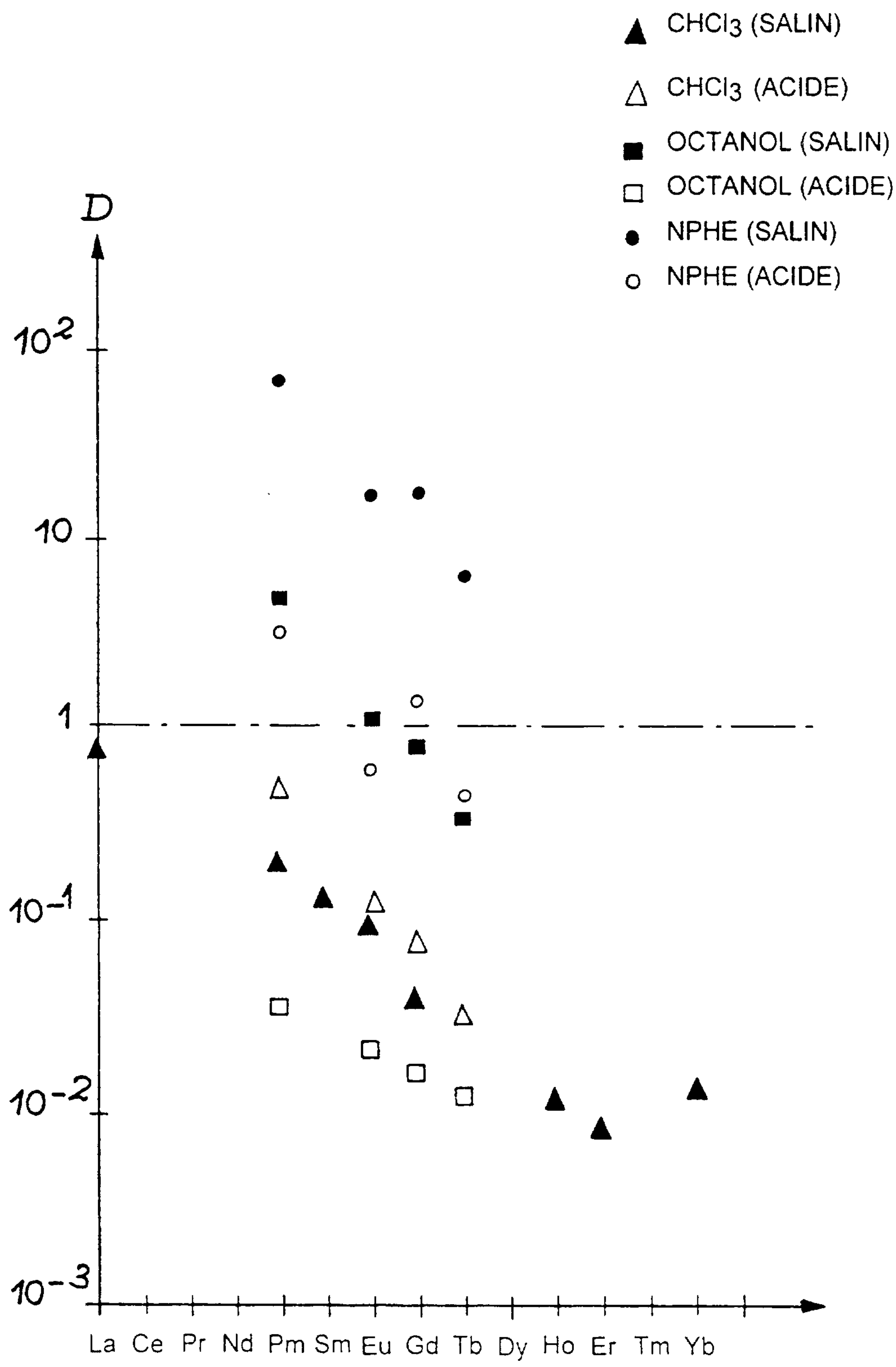
CHCl3 (SALIN)
CHCl3 (ACIDE)
OCTANOL (SALIN)
OCTANOL (ACIDE)
NPHE (SALIN)
NPHE (ACIDE)
D
10^2
10
1
10^-1
10^-2
10^-3
La Ce Pr Nd Pm Sm Eu Gd Tb Dy Ho Er Tm Yb

FIG. 3

FIG. 4

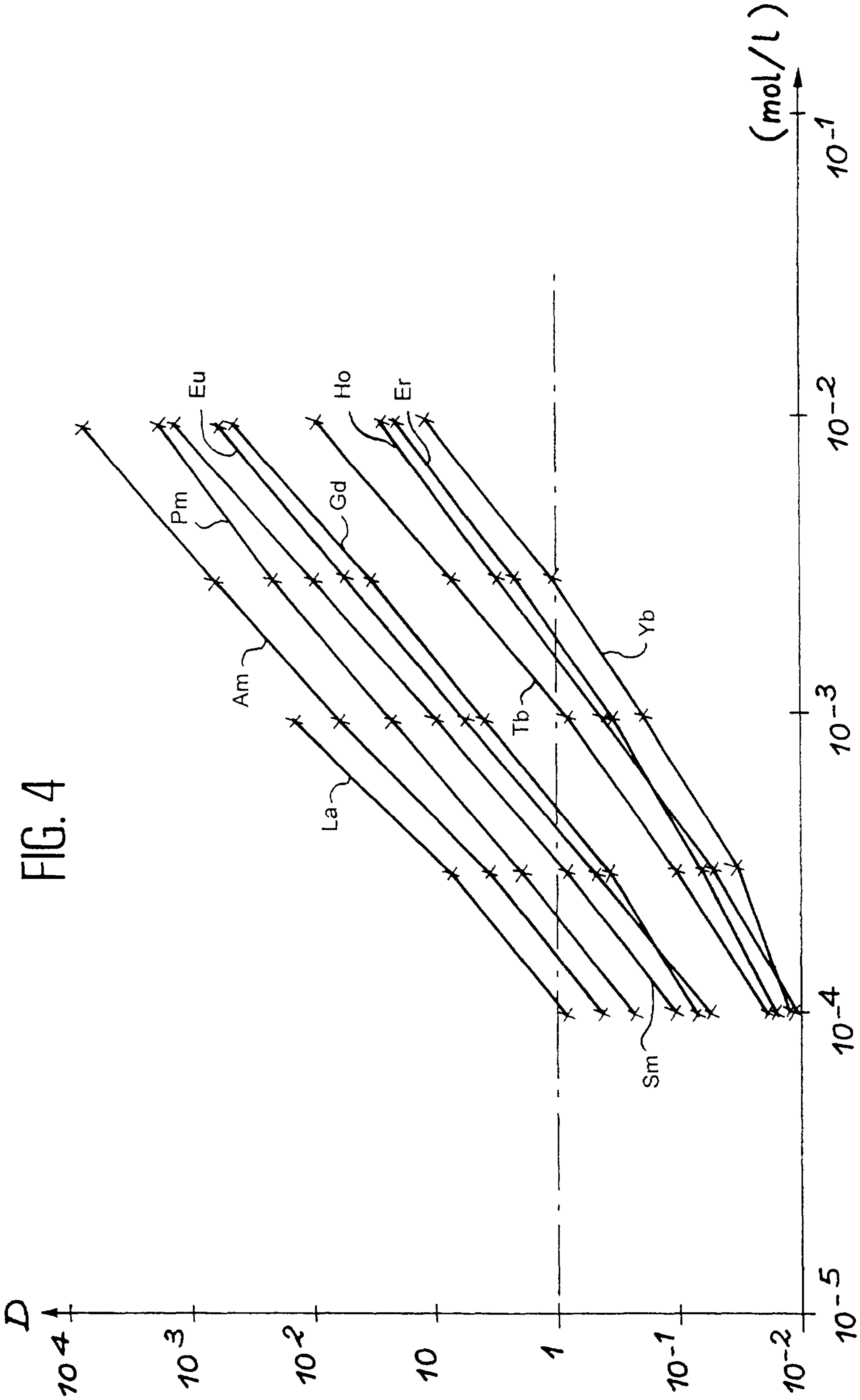
D
10 4
10 3
10 2
10
1
10-1
10-2
10-5
10-4
10-3
10-2
10-1
(mol/L)
La
Am
Pm
Eu
Gd
Ho
Er
Tb
Yb
Sm